Europäisches Patentamt

European Patent Office

Office européen des brevets

(19)

(11) **EP 0 392 471 B1**

(12) # EUROPEAN PATENT SPECIFICATION

(45) Date of publication and mention
of the grant of the patent:
**02.01.1997 Bulletin 1997/01**

(51) Int Cl.6: **G01N 3/00**, G01N 3/32,
G01N 3/60

(21) Application number: **90106875.9**

(22) Date of filing: **10.04.1990**

(54) **Method for evaluating life of connection**

Verfahren zur Bestimmung der Lebensdauer einer Verbindung

Méthode d'évaluation de la durée de vie d'une connexion

(84) Designated Contracting States:
**DE NL**

(30) Priority: **10.04.1989 JP 87927/89**

(43) Date of publication of application:
**17.10.1990 Bulletin 1990/42**

(73) Proprietors:
• **HITACHI, LTD.**
**Chiyoda-ku, Tokyo 100 (JP)**
• **HITACHI MICROCOMPUTER SYSTEM LTD.**
**Kodaira-shi Tokyo (JP)**

(72) Inventors:
• **Satoh, Ryohei**
**Totsuka-ku, Yokohama-shi (JP)**
• **Arakawa, Katsuhiro**
**Totsuka-ku, Yokohama-shi (JP)**
• **Kanai, Kiyoshi**
**Katsuta-shi (JP)**
• **Takahashi, Tsutomu**
**Sakura-shi (JP)**
• **Takenaka, Takaji**
**Hadano-shi (JP)**
• **Imada, Haruhiko**
**Hadano-shi (JP)**

(74) Representative: **Altenburg, Udo, Dipl.-Phys. et al**
**Patent- und Rechtsanwälte,**
**Bardehle . Pagenberg . Dost . Altenburg .**
**Frohwitter . Geissler & Partner,**
**Galileiplatz 1**
**81679 München (DE)**

(56) References cited:
• **PROCEEDINGS OF THE 35TH ELECTRONIC COMPONENTS CONFERENCE 1985, NEW YORK, US pages 60 - 72; G.V. CLATTERBAUGH ET AL.: 'Thermomechanical Behaviour of Soldered Interconnects for Surface Mounting: Comparison of Theory and Experiment '**
• **PROCEEDINGS OF THE 35TH ELECTRONIC COMPONENTS CONFERENCE 1985, NEW YORK, US pages 46 - 51; D.STONE ET AL.: 'The Effects of Service and Material Variables on the Fatigue Behaviour of Solder Joints During the Thermal Cycle '**
• **PROCEEDINGS OF THE IEEE/CHMT INTERNATIONAL ELECTRONIC MANUFACTURING TECHNOLOGY SYMPOSIUM 1986, NEW YORK, US pages 173-184; J.H. LAU ET AL.: "Nonlinear Analysis of Surface Mount Solder Joint Fatigue"**
• **SOLID STATE TECHNOLOGY. July 1990, WASHINGTON US pages 48 - 54; P. LIN ET AL.: 'Design Considerations for a Flip-Chip Joining Technique '**

**Description**

BACKGROUND OF THE INVENTION

The present invention relates to a method for evaluating the life of a connection, and more particularly to a method for evaluating the life of a connection which greatly depends on thermal fatigue, such as a solder connection of an electronic circuit device.

With respect to general fatigue life of metal, several methods for evaluating it and life rules therefor, as shown in Table 1, have been proposed on the basis of many researches and experience of fatigue breakdown accidents; some of them have been put into practice.

Particularly, it is known that the Manson-Coffin rule of No. 1 can be used to evaluate the low cycle fatigue life of many metals; the actual life can be evaluated by the repetition amendment speed equation of No. 9 which is obtained by modifying this rule regarding to the repetitive frequency f of fatigue and the length $\underline{a}$ of a crack.

Further, a method for evaluating the life of the solder connection of an electronic circuit device is disclosed in Solid State T-echnology July (1970) pp. 48-54.

There, a formula to estimate life time is disclosed. The life time formula suggested is

$$Nf = Cf^{1/3} \tau_{max}^{-2} exp\ (\Delta E/KT)$$

$$\tau_{max} = \frac{\Delta\alpha \cdot \Delta T \cdot d}{W}$$

where W indicates a configuration and the effect of solder. It is disclosed to use the maximum shearing strain on the basis of the pure shearing deformation for determining the life time which does not reflect the actual conditions. However, no attention is paid to speed of crack advancement da/dN, a wrong life time is calculated for example in the case, where two different cracks caused by the same strain run into each other.

The methods disclosed in the documents of the state of the art obtain $\Delta\varepsilon_{eqmax}$ rather than $\tau$ for estimating life time from the relationship between $\tau$ and $\Delta\varepsilon_{eqmax}$.

TABLE 1

| No. | DEVELOPER | LIFE EQUATION OR CRACK ADVANCING SPEED EQUATION |
|---|---|---|
| 1 | S.S. Manson, L.F. Coffin (Manson-Coffin RULE) | $\Delta\varepsilon_p \cdot N^n = C$ |
| 2 | S.S. Manson, G.R. Halford (STRAIN REGION DIVISION TECHNIQUE) | $\Sigma\Phi_f = 1$ <br> $\Phi_f = 1/N_{pp}+1/N_{cc}+1/N_{cp}+1/N_{pc}$ <br> $\Delta\varepsilon_{pp}/D_p = 0.75\ N_{pp}^{-0.6}$ <br> $\Delta\varepsilon_{cc}/D_c = 0.75\ N_{cc}^{-0.8}$ <br> $\Delta\varepsilon_{pc}/D_p = 1.25\ N_{pc}^{-0.8}$ <br> $\Delta\varepsilon_{cp}/D_c = 0.25\ N_{cp}^{-0.8}$ |
| 3 | H.W. Liu | $d_a/d_N = C(\Delta\sigma)^2 a$ <br> $\Delta\sigma = \sigma max - \sigma min$ |
| 4 | P.C. Paris (Paris RULE) | $d_a/d_N = C(\Delta K)^n$ <br> $\Delta K = Kmax - Kmin$ |
| 5 | G. Welter, J.A. Choquet | $d_a/d_N = C(\varepsilon_{TR}\sqrt{a})$ <br> $\varepsilon_{TR} = \varepsilon_p + \varepsilon_e$ |
| 6 | T. Yokobori (KINETICS MODEL OF DISLOCATION) | $d_a/d_N = Cf^m\Delta K^n exp(-Q/kT)$ |
| 7 | W. Elber (RULE OF COEFFICIENT ENLARGING EFFECTIVE STRESS) | $d_a/d_N = C(\Delta Keff)^n$ <br> $\Delta Keff = Kmax - Kop$ |
| 8 | J.R. Rice, P.C. Paris | $d_a/d_N = C(\Delta J)^n$ |

TABLE 1   (continued)

| No. | DEVELOPER | LIFE EQUATION OR CRACK ADVANCING SPEED EQUATION |
|---|---|---|
| 9 | H.D. Solomon, L.F. COffin (REPETITION AMENDMENT SPEED RULE) | $d_a/d_N = Ca(\Delta\varepsilon_p)^{nfm}$ |
| 10 | K. Tanaka, S. Taira | $d_a/d_N = C(\Delta\Phi)^n$ |

(N; LIFE), ($\Delta\varepsilon_p$; PLASTIC STRAIN AMPLITUDE), (C, n, m; CONSTANT), ($N_{pp}$; p p WAVEFORM LIFE), ($N_{cc}$; c c WAVEFORM LIFE), ($N_{cp}$; c p WAVEFORM LIFE), ($N_{pc}$; p c WAVEFORM LIFE), ($D_p$; PULLING FRACTURE DUCTILITY AT A HIGH TEMPERATURE FOR SHORT TIME), (Dc; CREEP FRACTURE DUCTILITY), ($\Delta\sigma$; STRESS RANGE), ($\Delta K$; RANGE OF COEFFICIENT ENLARGING STRESS), (a; CRACK LENGTH), ($\Delta\varepsilon_{TR}$; ENTIRE STRAIN RANGE), ($\Delta\varepsilon_p$, $\Delta\varepsilon_e$; PLASTIC AND ELASTIC STRAIN RANGE), (f; REPETITION FREQUENCY), (Q; ACTIVATION ENERGY), (k; BOLTZMANN'S CONSTANT), (T; TEMPERATURE), ($\Delta$Keff; RANGE OF COEFFICIENT ENLARGING EFFECTIVE STRESS), (Kop; K AT CRACK OPENING), ($\Delta J$; INTEGRATION RANGE), ($\Delta\Phi$; RANGE OF DISPLACEMENT OF CRACK OPENING)

As a distortion amplitude influencing a fatigue life, generally, the plastic distortion amplitude $\Delta\varepsilon_p$ in the life equations of Nos. 1 and 9 in Table 1 is adopted. $\Delta\varepsilon_p$ is defined as the range of distortion in the hysterisis stress-strain curve when mechanical stress is repeatedly applied to a material.

However, this $\Delta\varepsilon_p$ at a solder connection cannot be measured by the conventional techniques shown listed in Table 1. The reason therefor is as follows. If a temperature as high as the melting point of solder changes at e.g. a solder connection of a flip chip for an electronic circuit device, because of a difference between the flip chip and a substrate in their thermal expansion coefficient, the stress-strain occurring in the solder becomes a three-dimensional stress-strain state, and further changes because of the great dependency of the solder itself on temperature. In this way, the above conventional methods do not pay attention for influences from a temperature cycle in estimating range of distortion. For example, the junction between the flip chip for an electronic circuit and a substrate is subjected to great temperature change; its temperature will increase up to immediately below the melting point of solder (183-320°C in Pb-Sn series) because of heat generation in electronic components and environmental temperature. Nevertheless, the conventional techniques do not take such temperature change so that they cannot correctly evaluate the life of the junction subjected the thermal fatigue. More specifically, the advancing speed of a crack at the connection depends on the shape of the connection. The above conventional techniques do not take this consideration; therefore, they cannot know the remaining sectional area so that they cannot design the weight resistance and current capacity of the connection. Particularly, the technique disclosed in the above reference Solid State Technology takes only shearing strain $\gamma_{max}$ into consideration but does not take temperature dependency of the stress-strain of the solder for this shearing strain. Therefore, this technique also cannot evaluate the life of the junction or connection subjected to thermal fatigue. Thus, the conventional life evaluation methods cannot correctly evaluate the life of the connection so that many poor products will be made.

## SUMMARY OF THE INVENTION

An object of the invention is to provide a method for evaluating the life of a connection with high accuracy for a short time through a relatively simplified process.

This object is achieved by a method comprising the features according to claim 1. Further embodiments are defined in the dependent claims.

This object can be attained by adopting $\Delta\varepsilon_{eqmax}$ with higher precision as a strain amplitude which is an index of the thermal fatigue and taking into consideration the temperature dependency and a crack advancing speed in connection with an estimation of $\Delta\varepsilon_{eqmax}$.

The $\Delta\varepsilon_{eqmax}$, which is a maximum equivalent strain of the connection, can be an optimum index of the thermal fatigue is disclosed in the extended abstracts of The 103rd Autumn Convention of Nippon Kinzoku Gakkai, pp. 144-145, November 1989.

Prior to explaining the concept of the maximum equivalent strain, an equivalent stress-equivalent strain will be defined. The equivalent strain is generally defined from the field condition in a three-axis-strain field in material mechanics, i.e. Mises condition. The corresponding stress is the equivalent stress. Since a true single-axis pulling stress-true strain curve concerning polycrystalline soldering material can be regarded as taking uniform deformation of the soldering material, which is an ordinaly solder connecting portion itself, the curve itself is considered as equivalent pulling stress-equivalent strain curve.

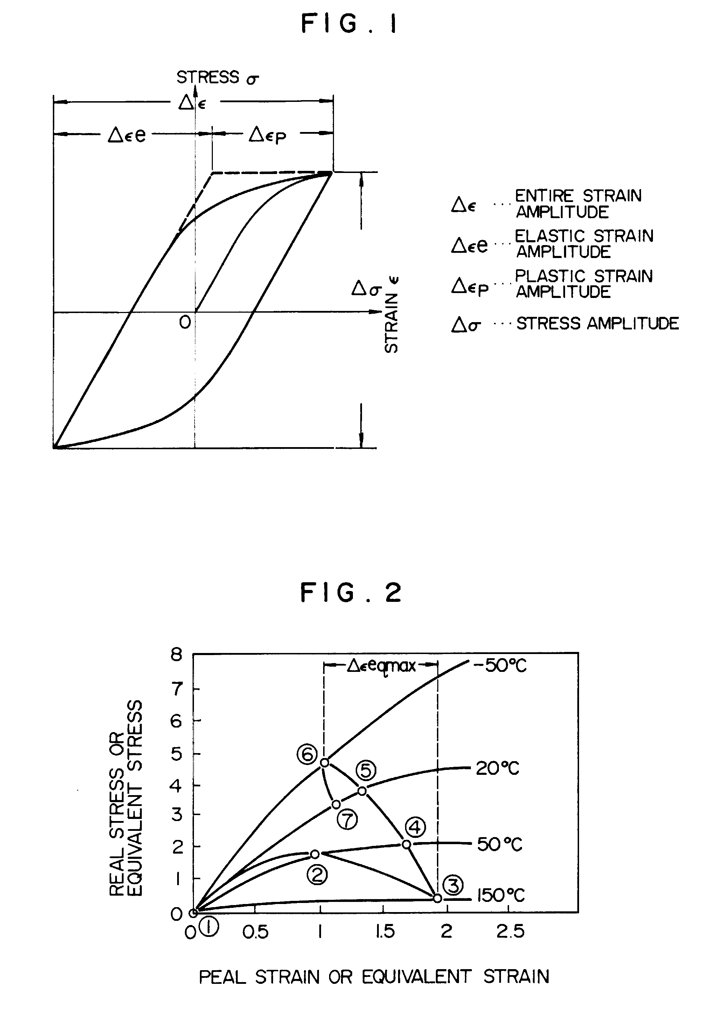

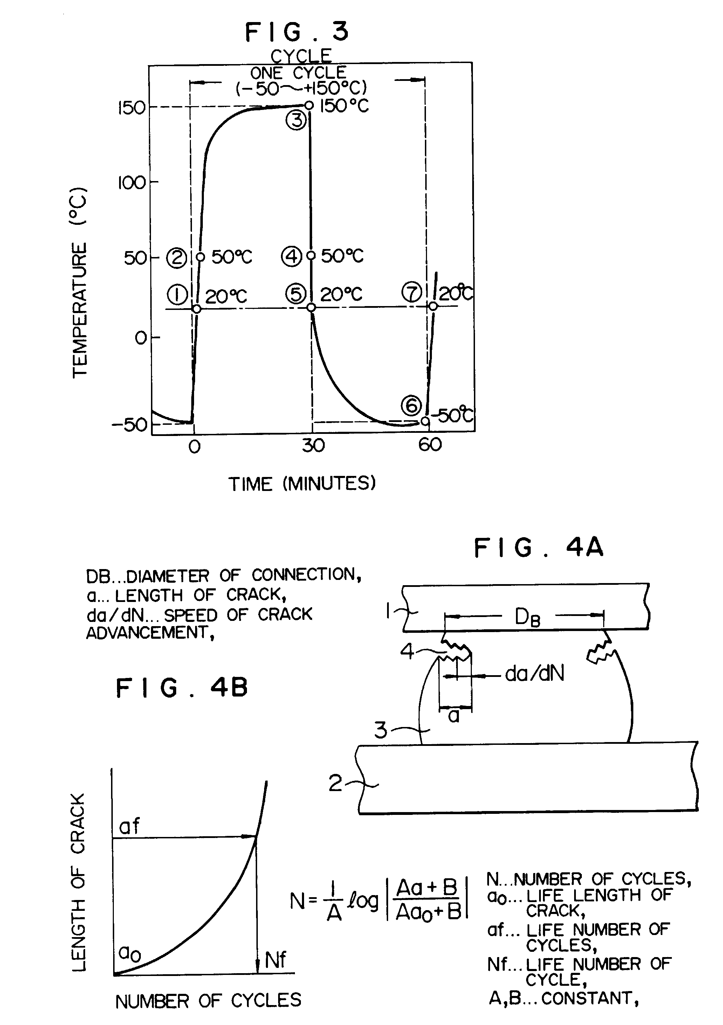

The equivalent strain amplitude can be defined as follows. When the connection is subjected to the temperature cycle as shown in Fig. 3, the stress-strain curve occurring in the solder at the connection changes in accordance with the temperature change ① to ⑦ in this temperature cycle. This change in the stress-strain curve is shown as ① to ⑦ in Fig. 2 which can be acquired by the finite-element method three-dimensional thermal elastic/plastic analysis taking into consideration the temperature dependency of the real stress-real strain of the solder. Specifically, when in Fig. 3, temperature rises from the initial state ① to 50°C ②, the maximum stress-strain of the solder (e.g. ②) stays anywhere in the real stress-real strain curve from ① to 50°C in Fig. 2. Likewise, one cycle of temperature change of 150°C → 50°C → 20°C → -50°C → 20°C results in the change in the stress-strain of ③-④-⑤-⑥-⑦. Then, assuming that this change corresponds to the stress-strain hysterisis curve shown in Fig. 1, its maximum equivalent amplitude $\Delta\varepsilon_{eqmax}$ is defined as the strain range between a high temperature 150°C to a low temperature -50°C as shown in Fig. 2. The maximum equivalent amplitude $\Delta\varepsilon_{eqmax}$ thus defined and the life $N_f$ can be correlated with high accuracy irrespectively of the shape of the connection and the temperature range, as disclosed in the above mentioned extended abstracts.

Another object of the present invention is to provide a criterion equation for evaluating the life and a criterion equation for evaluating the degree of a crack using the maximum equivalent amplitude $\Delta\varepsilon_{eqmax}$ and an equation representative of the speed of crack advancement; this crack advancement speed can be experimentally acquired in temperature cycle test by observing the braking face of the solder with the crack advanced by an electron microscope.

In order to attain another object of the present invention, an approximation equation for acquiring the maximum equivalent strain amplitude $\Delta\varepsilon_{eqmax}$ is simply obtained using the size of electronic components, the characteristic of the solder, and the condition of the temperature cycle; this approximation equation is programmed for a computer.

The crack advancement speed equation permits the life of the connection to its final breakdown to be estimated before the final breakdown.

The life evaluation criterion equation and the crack advancement criterion equation can give the number of temperature cycles for the degree of crack advancement permitted for assuring a remaining sectional area, and so gives the life of the connection. Contrary to this, these equations can also give the degree of crack advancement for the number of necessary cycles to know the remaining sectional area; a product can be designed so that it will not become poor within its life.

The approximation equation for acquiring the maximum equivalent strain amplitude can give the maximum equivalent strain amplitude by a simple operation for a short time so that the life evaluation criterion equation and the crack advancement criterion equation acquired using the value of the maximum equivalent strain amplitude permits the life and the degree of crack advancement to be calculated, thereby designing an electronic device with high accuracy.

## BRIEF DESCRIPTION OF THE DRAWINGS

Fig. 1 is a view of the conventional stress-strain hysterisis curve due to fatigue;

Fig. 2 is a graph of the equivalent stress-strain curve of thermal fatigue which is adopted in an embodiment of the present invention;

Fig. 3 is a graph showing the temperature profile used in an embodiment of the present invention;

Fig. 4A is a conceptual view of the crack occurring in the solder between a semiconductor integrated circuit and a substrate in an embodiment of the present invention;

Fig. 4B is a graph showing the relation between the length $\underline{a}$ of a crack and the number N of cycles giving rise to the life on the basis of the model of Fig. 4A;

Fig. 5 is a side view of the solder connection between the semiconductor integrated circuit and the substrate which is a basis of the partially enlarged model of Fig. 4A;

Fig. 6A is a graph showing a crack advancement speed equation $d_a/d_N = A_a + B$ which is defined by the relationship between the length $\underline{a}$ of a crack and a crack advancement speed;

Figs. 6B and 6C are SEM images at $a_1$ and $a_2$ on the crack, respectively;

Fig. 6D is a side view of the solder section where the semiconductor integrated circuit is mechanically removed from when the crack advances to point $a_2$;

Fig. 7 is a graph of an equivalent stress-strain curve at a point in a solder connection which is acquired by the method of Fig. 2 through the finite element method three-dimensional thermal elastic/plastic analysis;

Fig. 8 is a graph showing the criterion for evaluating the life which is defined by the relationship between the crack length $\underline{a}$ and the cycle number N taking the equivalent strain into consideration;

Fig. 9 is a side view showing the main size of each of the substrate, the solder and the electronic circuit component;

Fig. 10 is a graph showing the strain evaluation criterion for acquiring the equivalent strain amplitude from a pure shearing strain;

Fig. 11 is a flow chart of the program for performing an evaluation processing using the method according to the present invention; and

Figs. 12A and 12B are views showing examples of display on a display device which are outputted as a result of the program processing of Fig. 11.

## DESCRIPTION OF THE PREFERRED EMBODIMENTS

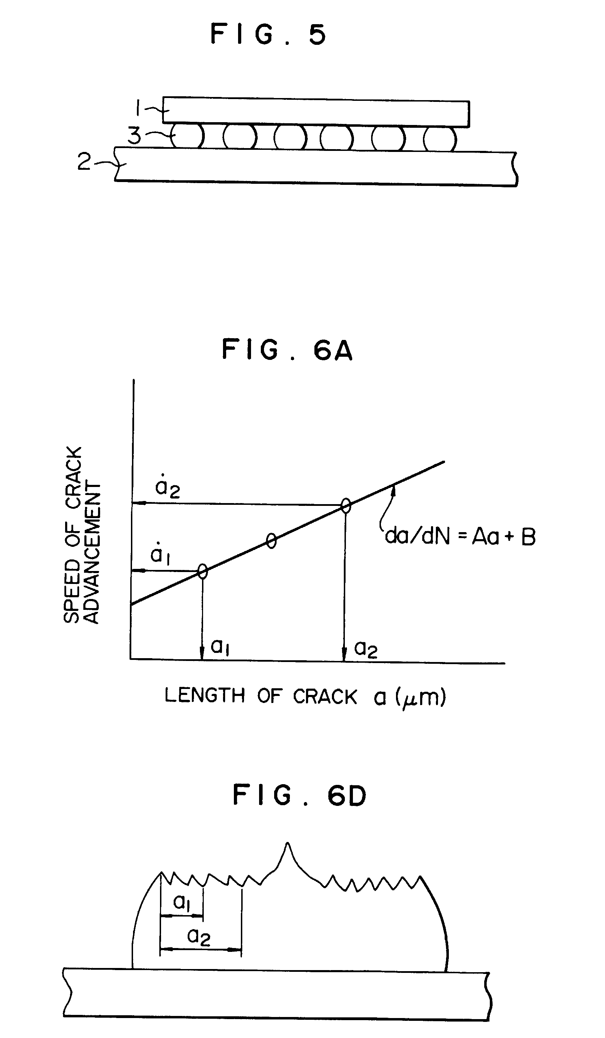

An embodiment of the present invention will be explained with reference to the drawings. Fig. 5 shows the state where a semiconductor integrated circuit 1 is connected with a circuit substrate through solders. If the temperature cycle of temperature changes due to power on/off of the circuit is repeated, because of a difference between the semiconductor integrated circuit 1 and the circuit substrate 2 in their thermal expansion coefficient, strains occur repeatedly in the solder connections 3; eventually cracks as shown in the partially enlarged view of Fig. 4A. For each of the temperature cycles, this crack will advance by an interval $d_a/d_N$ and also a notch remains on the breaking face on which the crack occurs. The interval $d_a/d_N$ is referred to as a crack advancement speed ($D_B$: diameter of connection).

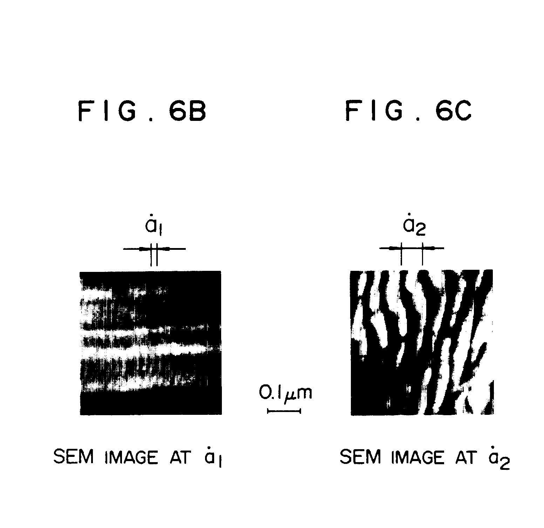

After the electronic device shown in Fig. 5 has been subjected to 1000 (one thousand) cycles of temperature change, the semiconductor integrated circuit 1 is mechanically removed therefrom. The faces of the crack 4 thus formed, as shown in Fig. 6D, are observed using a scanning type electronic microscope (SEM). Figs. 6B and 6C show the observed images. The crack advancement speeds $d_a/d_N$ at the ends of the lengths of $a_1$ and $a_2$, which are obtained from the observed images of Figs. 6B and 6C, are $\dot{a}_1$ and $\dot{a}_2$. As a result of these observation results and other observations, as seen from Fig. 6A, the relationship between the crack advancement speed and the crack length $\underline{a}$ can be approximated as a linear relationship

$$d_a/d_N = A_a + B \tag{1}$$

By integrating this equation (1), as shown in Fig. 4B, an equation for evaluating the life of a connection, i.e.

$$N = \frac{1}{A} \log \left| \frac{A_a + B}{A_{ao} + B} \right| \tag{2}$$

(A, B: constant, a: length of crack, $a_o$: initial length of crack, N: number of cycle) and a graph for evaluating the life can be obtained. Thus, the number of temperature cycles indicative of the life can be acquired from the crack length $a_f$ which is a criterion for the life (Generally it is assumed that when the crack advances to the center of the connection solder, the life ends, i.e. $D_B/2 = a_f$ ($D_B$: diameter of the connection solder)).

The life to breakdown estimated for the number of testing temperature cycles of 1000 is set for 3000 cycles; as a result of testing continued under the same condition, the breakdown was electrically confirmed at 3300 cycles approximate to the estimated 3000 cycles.

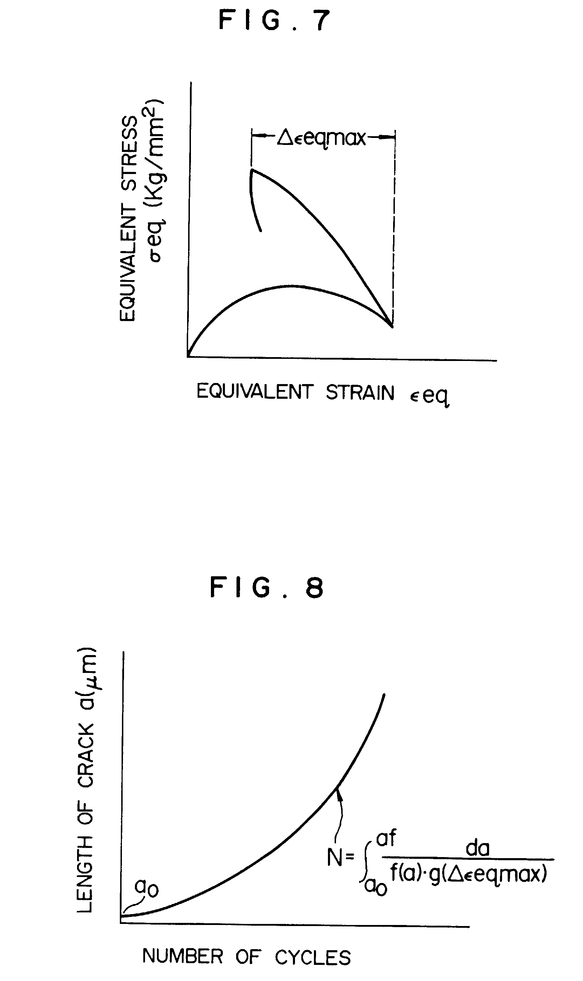

Further, the solder connection structure shown in Fig. 5 is subjected to the temperature change corresponding to the testing temperature cycle of room temperature $\rightarrow$ +150°C $\rightarrow$ -50°C $\rightarrow$ room temperature through the finite element method three-dimensional thermal elastic/plastic analysis as shown in Fig. 2. Then, the crack 4 as shown in Fig. 4A occurs in the solder connection structure. The hysterisis curve of the equivalent stress-equivalent strain at the crack 4 is shown in Fig. 7. As seen from Fig. 7, the strain amplitude is defined as the maximum equivalent strain amplitude $\Delta\varepsilon_{eqmax}$. The relationship between the maximum equivalent amplitude $\Delta\varepsilon_{eqmax}$, and the crack advancing speed $d_a/d_N$ and the crack length $\underline{a}$ acquired in the previous breakdown test can be expressed by

$$d_a/d_N = C(A_a + B) \cdot (\Delta\varepsilon_{eqmax}) \tag{3}$$

Equation (3) physically represents that the crack advancing speed $d_a/d_N$ increases with the increase of the strain amplitude $\Delta\varepsilon_{eqmax}$, and the life increases with the increase of the length of the connection for the same strain amplitude $\Delta\varepsilon_{eqmax}$.

By integrating Equation (3), the life $N_f$ can be acquired by the life evaluating criterion equation expressed by the following.

By using $N_f$ for expressing life number of cycles which causes fracture, $a_0$ for an initial defect, $a_f$ for a crack length when fractured, the above mentioned life evaluating criterion equation is expressed by,

$$\int_0^{N_f} d_N = \frac{1}{C} \cdot (\Delta\varepsilon_{eqmax})^{-n} \int_{a_0}^{a_f} \frac{1}{A_a + B} da \qquad (4)-1$$

$$N_f = \frac{1}{C} \cdot (\Delta\varepsilon_{eqmax})^{-n} \; \log \frac{|A_{af} + B|}{|A_{ao} + B|} \tag{4-2}$$

where, n is a material constant and c is a constant. ($a_f$: life length of crack)

Further, by calculating backwards from Equation (4)-2, the crack length $\underline{a}$ after N cycles can be acquired by the crack advancement evaluating equation expressed by equation (5). These relations are exemplified in Fig. 8.

$$a = \frac{1}{A} \{(A_{ao} + B)\exp\{C \cdot N(\Delta\varepsilon_{eqmax})^n\} - B\} \tag{5}$$

With respect to poor products, the actual life thereof is 3500 cycles which is very approximate to the life of 3200 cycles acquired from calculation, where values of $\Delta\varepsilon_{eqmax} \doteqdot 0.01$ (=1%), A: $8.18 \times 10^{-3}$, B: 0.18, C: 0.23, $A_f$: 100 μm and $a_o$: 0 are employed.

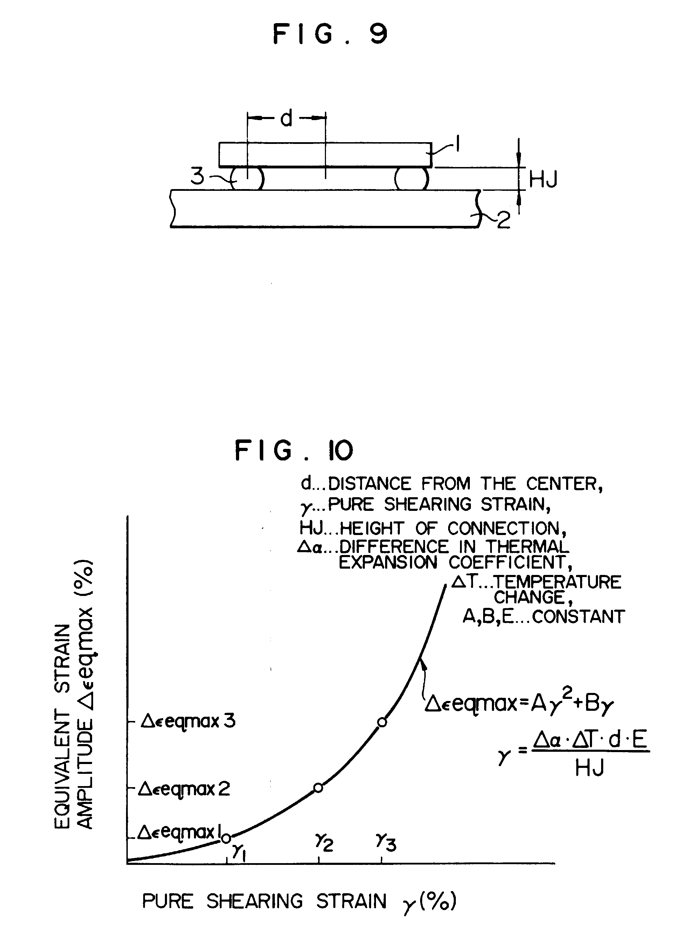

Meanwhile, the maximum equivalent strain amplitude $\Delta\varepsilon_{eqmax}$, which is decisive for the life of the solder connection due to thermal fatigue, greatly depends on the size of the semiconductor integrated circuit and the environmental condition for the same connection structure; to acquire it through the infinite element method three-dimensional elastic/plastic analysis is very troublesome. Then, with reference to Fig. 10, a technique for simply acquiring the maximum equivalent strain amplitude $\Delta\varepsilon_{eqmax}$ will be explained. Generally, the shearing strain $\gamma$ at the connection as shown in Fig. 9 can be expressed by

$$\gamma = \frac{\Delta\alpha \cdot \Delta T \cdot d \cdot E}{HJ} \tag{6}$$

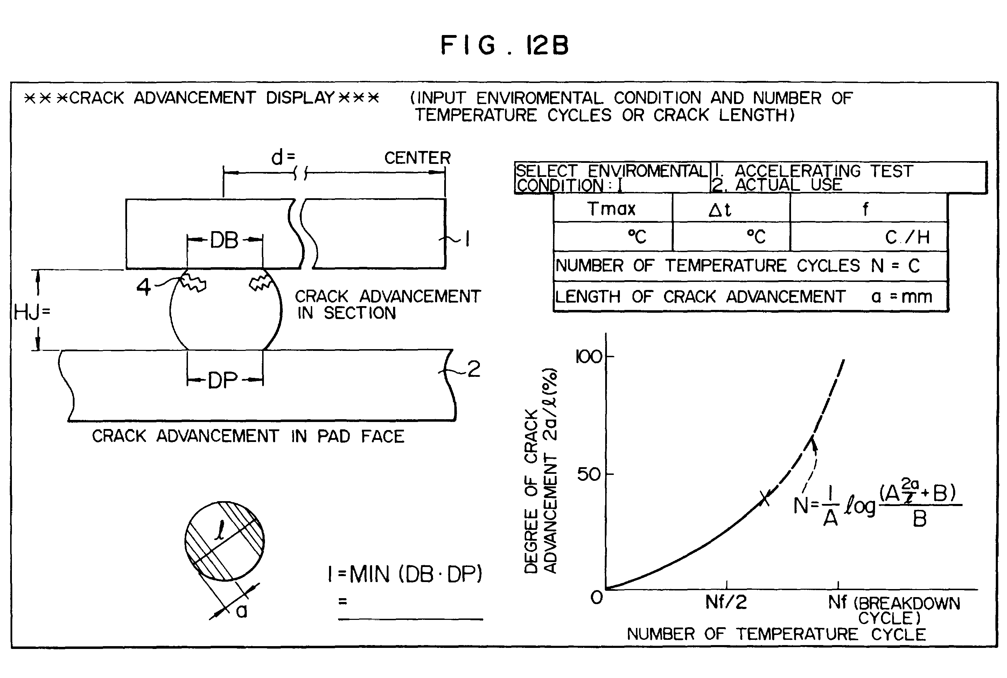

where d is the size of the semiconductor integrated circuit, HJ is the height of the connection, $\Delta\alpha$ is the difference between the semiconductor integrated circuit 1 and the circuit substrate 2 in their thermal expansion coefficient $\Delta T$ is the temperature difference therebetween in their temperature cycles, and E is a correction parameter depending on the shape of the connection. The maximum equivalent strain amplitudes $\Delta\varepsilon_{eqmax}1$, $\Delta\varepsilon_{eqmax}2$ and $\Delta\varepsilon_{eqmax}3$ corresponding to concrete values $\gamma_1$, $\gamma_2$, and $\gamma_3$ can be simply acquired. The values $\gamma_1$, $\gamma_2$, and $\gamma_3$ are obtained by a manual calculation of a structure model as shown in Figs. 12A, 12B in which certain dimensions are assigned, and $\Delta\varepsilon_{eqmax}1,2,3$, are obtained by finite element three-dimensional thermal elastic/plastic analysis. By connecting these points, an approximation curve as shown in Fig. 10 can be made so that an approximation equation for acquiring $\Delta\varepsilon_{eqmax}$ from $\gamma$ can be provided. It is discovered that the equation can be expressed using $\gamma$ by

$$\Delta\varepsilon_{eqmax} = A'\gamma^2 + B'\gamma \tag{7}$$

This equation permits the maximum equivalent strain amplitude to be simply calculated. Further, the life $N_f$ and the crack advancing degree $\underline{a}$ can also be simply acquired from Equations (4) and (5), respectively. Additionally, if there is a temperature difference between the electronic component, i.e. the semiconductor integrated circuit, and the circuit substrate, the shearing strain $\gamma$ can be more generally expressed by

$$\gamma = \frac{(\alpha_1 \cdot T_1 - \alpha_2 \cdot T_2)d \cdot E}{HJ} \tag{8}$$

where $\alpha_1$ and $T_1$ are the thermal expansion coefficient and temperature of the semiconductor integrated circuit $\alpha_2$ and $T_2$ are those of the circuit substrate.

In accordance with this embodiment, the life of the solder connection can be evaluated or estimated simply and correctly.

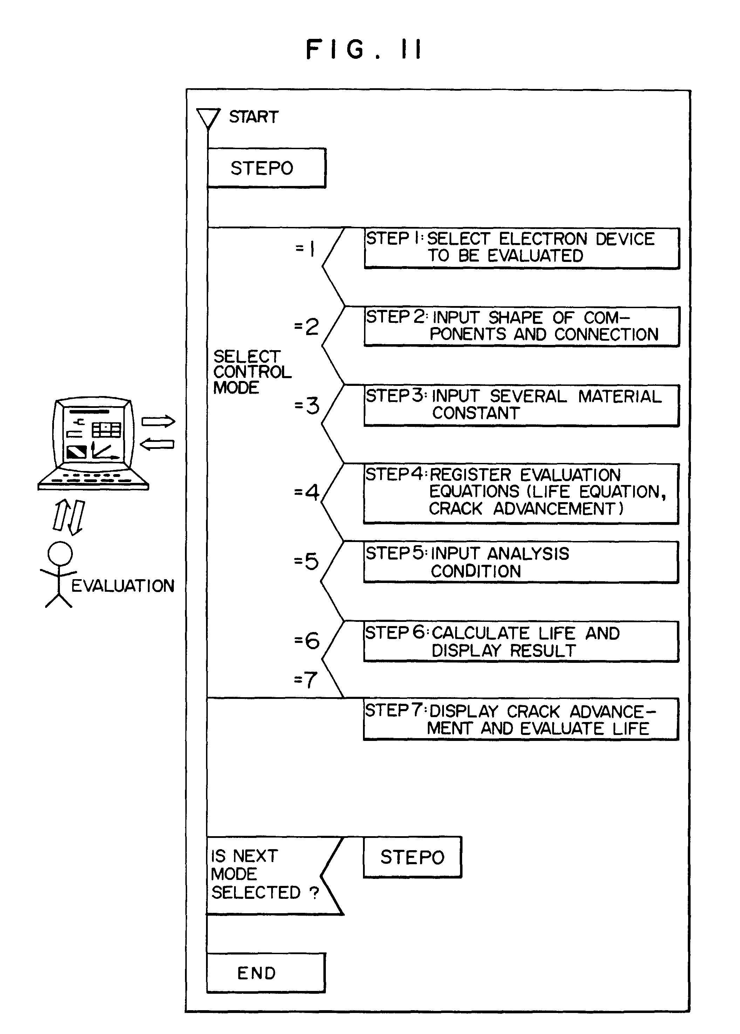

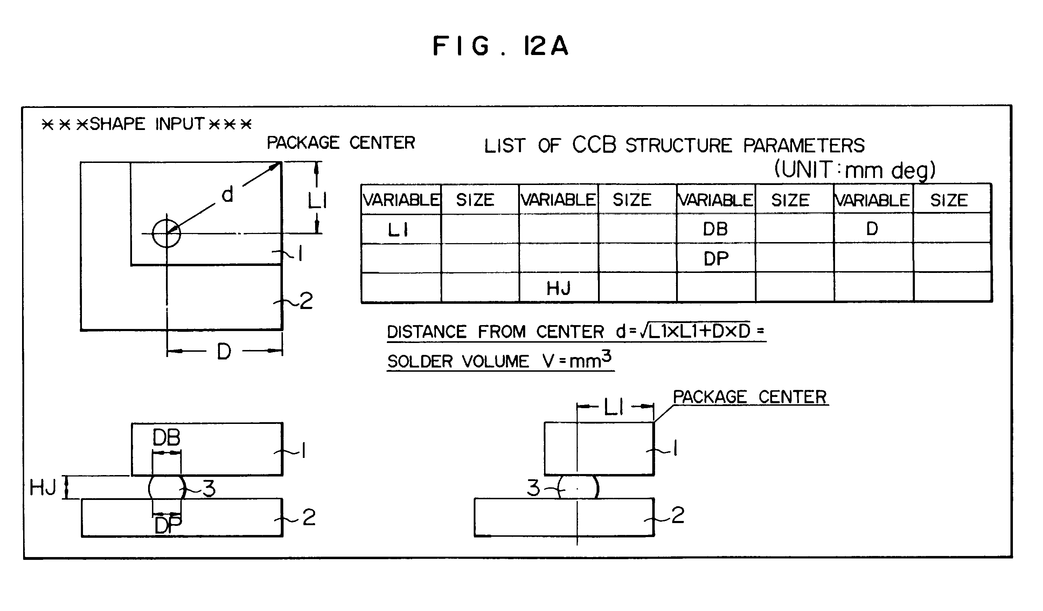

Now explanation will be given for another embodiment of the present invention which realizes the life evaluation method according to the present invention through a program. The flowchart of the entire program is shown in Fig. 11. The screen image displayed when the shape of the solder connection of the electronic component (flip chip or CCB chip) is input, and that displayed when the result of life evaluation and the degree of crack advancement are output are shown in Figs. 12A and 12B.

The evaluation through the program is carried out in the following process.

In Step 1, an object electronic component is designated by a key operation; for example, CCB is selected from a group consisting of CCB (Controlled Collapse Bonding), QFP (Quad Flat Package), PLCC (Plastic Leaded Chip Carrier), MSP (Mini Square Package), and flip chip etc. The selection operation in Step 1 displays the model of the CCB chip described by trigonometry as shown in Fig. 12A. With respect to the substrate 2, the CCB package chip 1 and the solder 3 connecting them, the items indicated as the shape data to be input for the CCB model are the distance $\underline{d}$ from the package center to the solder; the width direction distance D and longitudinal direction distance $L_1$ from the package center to the solder; the connecting width DB of the solder 3 on the side of the package 1; that DP thereof on the side of the substrate 2; and the height HJ of the package from the substrate 2.

In Step 2, the items or parameters required are input in such a manner that the respective columns of the list displayed for the CCB are filled with the corresponding data by a key operation. By filling the list with the required items in accordance with the items of the package model displayed by trigonometry, they can be surely input.

In Step 3, thermal expansion coefficients of the substrate 2 and the package (CCB) are input. By this step, parameters, except for $\Delta T$, required for calculation in equation (6) are input.

In Step 4, Equation (4), which is a criterion equation for evaluating the life of the solder connection, and Equation (5), which is an equation for evaluating the crack advancement, are input, and further constants and an index n are input. These equations can be read out from the sub-routine including model equations prepared for each of the substrates and packages, and thereafter the contains and the index are substituted for the equations.

In Step 5, analysis conditions such as the upper and lower limit temperatures in the temperature cycle, the repetition frequency thereof, and the temperature difference between the substrate and package are input. Then, in Step 6, if the program is operated, $\gamma$ in equation (6) and $\Delta\varepsilon_{eqmax}$ in equation (7) are sequentially calculated according to input parameters and analysis conditions. The obtained values in equations (6) and (7) are used to calculate life time in calculation of life time equation (4)-1 and crack advancement equation (5).

Finally, in Step 7, the crack advancement on a section of the CCB model and on the solder pad surface as shown in Fig. 12B is displayed. The crack advancement display as shown in Fig. 12B also includes the display of the maximum temperature, the temperature difference between the substrate and package, the repetition frequency, the present number of temperature cycles and the present length of crack advancement. From these displays, the degree of crack advancement in the solder connection and the remaining life thereof can be easily evaluated.

Additionally, the above life evaluation process can be repeated from any step thereof, and can also be applied to a flat package IC and the other chip components.

In accordance with the present invention, several calculations in the above program can be easily carried out using a large scale computer or a personal computer thereby the design the life of the electronic devices.

The life number of temperature cycles and the life degree of crack advancement estimated for a sample prepared for life test in accordance with the present invention agree with those actually measured within an error range of ±10%. Also, the time required for estimation is as short as 5 - 10 minutes. this time is much shorter than 2 - 5 hours (measured in the CPU time) required to calculate the maximum equivalent strain amplitude through the infinite element method using a super computer S810 in the previous embodiment. In short, in accordance with the present invention, the process for evaluating the life of the solder connection of an electronic component, which has been difficult, can be carried out in a short time and at low cost using a personal computer or a large scale computer.

Further, the life of the connection can be evaluated through the infinite element method three-dimensional thermal elastic/plastic analysis for any temperature distribution and environmental condition; it can be evaluated with high accuracy. Thus, the life evaluation method according to the present invention can contribute to enhance the reliability of electronic devices which will be strictly demanded in the future.

**Claims**

1. A method for diagnosing a connection life of a solder connection (3) between a substrate (2) and parts (1) loaded thereon, said method being performed by a computer, said computer having input means for inputting information and processing means for processing said input information and outputting a result of said processing, said method comprising the steps of:

   a) preparing a plurality of solder connections (3) of the same connection structure with different connection parameters;
   b) determining by said processing means shearing strains and equivalent strain amplitudes of each of said solder connections (3) to determine an approximated shearing strain/equivalent strain amplitude correlation model pertinent to a corresponding one of said solder connections;
   c) applying a number of heat cycles to said solder connections (3) to cause cracks in each of said solder connections;
   d) measuring a total crack length after said heat cycles and a particular crack advancement caused by the very last cycle of said heat cycles to obtain a crack length/crack advancement speed correlation model;

e) determining a solder connection life diagnosing model with said equivalent strain amplitude by integrating said crack length/crack advancement speed correlation model;

f) measuring a shearing strain of a solder connection (3) to be diagnosed of said same connection structure with a desired parameter to obtain a corresponding equivalent strain amplitude by using said approximated shearing strain/equivalent strain amplitude correlation model; and

g) determining a connection life if said solder connection (3) with said desired parameter by applying said equivalent strain amplitude of said solder connection with said desired parameter into said connection life diagnosing model.

2. The method for diagnosing a connection life of a solder connection (3) according to claim 1, wherein said relationship between said values of said equivalent strain amplitudes is represented by

$$\Delta\varepsilon_{eqmax} = A\tau^2 + B'\tau, \ \tau = \frac{\Delta\alpha \cdot \Delta T \cdot d \cdot E}{HJ}$$

where $\Delta\varepsilon_{eqmax}$ is the maximum equivalent strain of the connection, $\tau$ is a pure shearing strain, A, B are constants, d is the distance from of center of a semiconductor chip and package, $\Delta\alpha$ is the difference in a thermal coefficient, E is a constant, HJ is the height of the solder connection, and $\Delta T$ is a temperature change.

3. The method for diagnosing a connection life of a solder connection (3) according to claim 1, wherein said connection life diagnosing model is represented by the equation:

$$N_f = \frac{1}{C} \log \left| \frac{A_{af} + B}{A_{ao} + B} \right| (\Delta\varepsilon_{eqmax})^{-n}$$

where $N_f$ is the life number of temperature cycles which causes a fracture; A, B and C are constants; af is the life length of a crack; ao is the initial length of a crack; and $\Delta\varepsilon_{eqmax}$ is the maximum equivalent strain of the connection (3).

4. The method for diagnosing a connection life of a solder connection (3) according to claim 1, wherein a model for diagnosing the advancement of a crack is made using said equivalent strain amplitudes, and said equivalent strain amplitude is substituted into said model for diagnosing crack advancement to diagnose the length of the crack.

5. The method for diagnosing a connection life for a solder connection life for a solder connection according to claim 4, wherein said model for diagnosing crack advancement is represented by

$$a = \frac{1}{A} \{(A_{ao} + B) \exp \{C \cdot N (\Delta\varepsilon_{eqmax})^{-n}\} - B\}$$

where $\Delta\varepsilon_{eqmax}$ is the maximum equivalent strain of the connection; a is the length of a crack; N is the number of cycles; A, B, C are constants; and ao is the initial length of the crack.

6. The method for diagnosing a connection life of a solder connection according to claim 1, wherein said life of the connection is defined as the number of heat cycles at which the connection is broken.

7. The method for diagnosing a connection life of solder connection according to claim 1, wherein said values of said equivalent strain amplitudes are acquired from the relationship between said values of said equivalent strain amplitudes, which are prepared by a finite element method three-dimensional thermal elastic/plastic analysis, and said values of said shearing strains.

8. The method for diagnosing a connection life of a solder connection (3) according to claim 1, wherein said parts loaded on said substrate (2) comprise an electronic device, and said shearing strain occurs in said solder connection (3).

9. The method for diagnosing a connection life of a solder connection (3) according to claim 5, wherein said parts loaded on said substrate (2) comprise chip parts (1) connected with said substrate through said solder connection (3).

**10.** The method for diagnosing a connection life of a solder connection (3) according to claim 9, wherein said chip parts (1) are any one selected from the group consisting of CCB (Controlled Collapse Bonding), QFP (Quad Flat Package), PLCC (Plastic Leaded Chip Carrier), MSP (Mini Square Package), flip chip, condenser and resister.

**11.** The method for diagnosing a connection life of a solder connection (3) according to claim 5, wherein said shearing strain τ is defined as

$$\tau = \frac{\Delta\alpha \cdot \Delta T \cdot d \cdot E}{HJ}$$

where Δα is the difference between the members (1, 2, 3) in their thermal expansion coefficient, ΔT is a temperature change, d is the size of the electronic device, E is a correction parameter, and HJ is the height of the connection.

**12.** The method for diagnosing a connection life of a solder connection (3) according to claim 1, wherein said result of said processing is displayed at display means, said method comprising the steps of:

a) inputting by said input means parameters of a plurality of different solder connections (3) of the same connection structure;
b) calculating by said processing means shearing strains of said plurality of different solder connections (3);
c) calculating by said processing means equivalent strain amplitude corresponding to thermal fatigue life time for each of the values of said plurality of shearing strains;
d) defining by said processing means a relationship between said shearing strains and said equivalent strain amplitudes;
e) formulating by said processing means a life evaluation criterion equation expressed using said equivalent strain amplitudes;
f) inputting by said input means a total crack length and a particular crack advancement by the very last cycle of a number of heat cycles applied to said plurality of different solder connections (3);
g) determining by said processing means a crack length/crack advancement speed correlation model, thereby obtaining solder connection life diagnosing model with said equivalent strain amplitude;
h) inputting a desired parameter of said solder connection (3) to be diagnosed of said same connection structure;
j) determining by said processing means a corresponding equivalent strain amplitude corresponding to said desired parameter by using a relationship between said shearing strain and said equivalent strain amplitudes;
k) substituting said equivalent strain amplitudes for the life evaluation criterion equation to acquire the connection life of said desired parameter; and
l) displaying by said display means the life of said connection;

i) wherein an equation for diagnosing the advancement of a crack is made using said equivalent strain amplitudes, and said equivalent strain amplitude is substituted for a crack advancement diagnosing equation to calculate the length of the crack;
ii) wherein said inputting step includes the steps of defining a member for which the life of the solder connection (3) is to be diagnosed to display on said display means a shape model of the member,

m) inputting by said input means required parameters representative of the shape of the connection (3) in accordance with the shape model displayed on said display means;
n) inputting required material constants for the member to be evaluated;
o) inputting an analysis condition of the member to be evaluated;
p) performing by said processing means a calculation in accordance with said solder connection life diagnosing model and said crack advancement diagnosing equation; and
q) wherein said displaying step includes the step of displaying the calculation result as a length of the crack on the shape model on the display means, and illustrating said diagnosing result on a solder connection life diagnosing graph representative of the relationship between the number of temperature cycles and the length of the crack.

**13.** The method for diagnosing a connection life of a solder connection (3) according to claim 12, wherein said solder connection life diagnosing model and said crack advancement diagnosing equation are stored in a memory of said computer as a sub-routine after being once obtained.

14. The method for diagnosing a connection life of a solder connection (3) according to claim 12, wherein said step of defining the member (1, 2, 3) is performed by selecting a chip part (1); and wherein said chip part is selected from any one of a group consisting of CCB (Controlled Collapse Bonding), QFP (Quad Flat Pakkage), PLCC (Plastic Leaded Chip Carrier), MSP (Mini Square Package), flip chip, condenser and resister.

15. The method for diagnosing a connection life of a solder connection (3) according to claim 12, wherein said shape model shows the connection relationship between the members (1, 2, 3) by trigonometry.

16. The method for diagnosing a connection life of a solder connection (3) according to claim 12, wherein sa<id parameters comprise the size of each of the members (1, 2, 3) and the size of a gap between said members.

17. The method for diagnosing a connection life of a solder connection (3) according to claim 12, wherein said material constants comprise the thermal expansion coefficient of each of said members (1, 2, 3).

18. The method for diagnosing a connection life of a solder connection (3) according to claim 12, wherein said analysis condition comprises a temperature difference, and a repetition frequency.

**Patentansprüche**

1. Verfahren zur Diagnose einer Verbindungs-Lebensdauer einer Lötverbindung (3) zwischen einem Substrat (2) und darauf geladenen Teilen (1), wobei das Verfahren mittels eines Computers durchgeführt wird, wobei der Computer eine Eingabeeinrichtung zum Eingeben von Informationen und eine Verarbeitungseinrichtung zum Verarbeiten der Eingabe informationen und zum Ausgeben eines Ergebnisses des Verarbeitens aufweist, wobei das Verfahren die Schritte aufweist:

a) Vorbereiten einer Vielzahl von Lötverbindungen (3) derselben Verbindungsstruktur mit unterschiedlichen Verbindungsparametern;

b) Bestimmen von Schubbeanspruchungen und äquivalenten Beanspruchungsamplituden von jeder der Lötverbindungen (3) durch die Verarbeitungseinrichtung, um ein angenähertes Korrelationsmodell für die Schubbeanspruchung/äquivalente Beanspruchungsamplitude zu bestimmen, welches zu einer entsprechenden der Lötverbindungen gehört;

c) Anlegen einer Anzahl von Wärmezyklen an die Lötverbindungen (3), um Risse in jeder der Lötverbindungen zu bewirken;

d) Messen einer Gesamtrißlänge nach den Wärmezyklen und einem besonderen Rißfortschritt, welcher durch den allerletzten Zyklus der Wärmezyklen bewirkt wurde, um ein Rißlänge/Rißfortschrittsgeschwindigkeits-Korrelationsmodell zu erhalten;

e) Bestimmen eines Lötverbindungs-Lebensdauer-Diagnosemodells mit der äquivalenten Beanspruchungsamplitude durch Integrieren des Rißlängen/Rißfortschrittsgeschwindigkeits-Korrelationsmodells;

f) Messen einer als von derselben Verbindungsstruktur zu diagnostizierenden Schubbeanspruchung der Lötverbindung (3) mit einem gewünschten Parameter, um eine entsprechende äquivalente Beanspruchungsamplitude zu erhalten, indem das angenäherte Schubbeanspruchung/äquivalente Beanspruchungsamplituden-Korrelationsmodell verwendet wird; und

g) Bestimmen einer Verbindungs-Lebensdauer der Lötverbindung (3) mit dem gewünschten Parameter durch Anwenden der äquivalenten Beanspruchungsamplitude der Lötverbindung mit dem gewünschten Parameter in dem Verbindungs-Lebensdauerdiagnose-Modell.

2. Verfahren zur Diagnose einer Verbindungs-Lebensdauer einer Lötverbindung (3) nach Anspruch 1, bei welchem die Beziehung zwischen den Werten der äquivalenten Beanspruchungsamplituden dargestellt ist durch

$$\Delta\varepsilon_{eqmax} = A\tau^2 + B'\tau \; , \tau = \frac{\Delta\alpha \cdot \Delta T \cdot d \cdot E}{HJ}$$

wobei $\Delta\varepsilon_{eqmax}$ die maximale äquivalente Beanspruchung der Verbindung ist, $\tau$ eine reine Schubbeanspruchung ist, A, B Konstanten sind, d der Abstand von der Mitte eines Halbleiterchips und -gehäuses ist, $\Delta\alpha$ die Differenz eines thermischen Koeffizienten ist, E eine Konstante ist, HJ die Höhe der Lötverbindung ist und $\Delta T$ eine Temperaturänderung ist.

3. Verfahren zur Diagnose einer Verbindungs-Lebensdauer einer Lötverbindung (3) nach Anspruch 1, bei welchem das Verbindungs-Lebensdauer-Diagnosemodell durch die Gleichung dargestellt ist:

$$N_f = \frac{1}{C} \log \left| \frac{A_{af} + B}{A_{ao} + B} \right| (\Delta\varepsilon_{eqmax})^{-n}$$

wobei $N_f$ die Lebensdauer-Anzahl von Temperaturzyklen ist, welche einen Bruch hervorruft; A, B und C Konstanten sind, af die Lebensdauer-Länge eines Risses ist; ao die Anfangslänge eines Risses ist; und $\Delta\varepsilon_{eqmax}$ die maximale äquivalente Beanspruchung der Verbindung (3) ist.

4. Verfahren zur Diagnose einer Verbindungs-Lebensdauer einer Lötverbindung (3) nach Anspruch 1, bei welchem ein Modell zur Diagnose des Rißfortschrittes unter Verwendung der äquivalenten Beanspruchungsamplituden hergestellt wird und die äquivalente eanspruchungsamplitude zur Diagnose des Rißfortschritts in das Modell eingesetzt wird, um die Länge des Risses zu diagnostizieren.

5. Verfahren zur Diagnose einer Verbindungs-Lebensdauer für eine Lötverbindung nach Anspruch 4, bei welchem das Modell zur Diagnose des Rißfortschrittes dargestellt ist durch

$$a = \frac{1}{A} \{(A_{ao} + B) \exp \{C \cdot N (\Delta\varepsilon_{eqmax})^{-n}\} - B\}$$

wobei $\Delta\varepsilon_{eqmax}$ die maximale äquivalente Beanspruchung der Verbindung ist, a die Länge eines Risses ist, N die Anzahl von Zyklen ist, A, B, C Konstanten sind, und ao die Anfangslänge des Risses ist.

6. Verfahren zur Diagnose einer Verbindungs-Lebensdauer einer Lötverbindung nach Anspruch 1, bei welchem die Lebensdauer der Verbindung als die Anzahl von Wärmezyklen definiert ist, bei welcher die Verbindung gebrochen ist.

7. Verfahren zur Diagnose einer Verbindungs-Lebensdauer einer Lötverbindung nach Anspruch 1, bei welchem die Werte für die äquivalenten Beanspruchungsamplituden aus der Beziehung zwischen den Werten der äquivalenten Beanspruchungsamplituden, welche durch ein Finite-Elemente-Verfahren einer dreidimensionalen thermischen elastisch/plastischen Analyse aufbereitet werden, und aus den Werten der Schubbeanspruchungen gewonnen werden.

8. Verfahren zur Diagnose einer Verbindungs-Lebensdauer einer Lötverbindung (3) nach Anspruch 1, bei welchem die auf das Substrat (2) geladenen Teile eine elektronische Vorrichtung aufweisen und die Schubbeanspruchung in der Lötverbindung (3) auftritt.

9. Verfahren zur Diagnose einer Verbindungs-Lebensdauer einer Lötverbindung (3) nach Anspruch 5, bei welchem die auf das Substrat (2) geladenen Teile Chip-Teile (1) aufweisen, welche mit dem Substrat durch die Lötverbindung (3) verbunden sind.

10. Verfahren zur Diagnose einer Verbindungs-Lebensdauer einer Lötverbindung (3) nach Anspruch 9, bei welchem die Chip-Teile (1) irgendeines derjenigen sind, welche aus der Gruppe ausgewählt sind, die aus CCB (Controlled Collapse Bonding), QFP (Quad Flat Package), PLCC (Plastic Leaded Chip Carrier), MSP (Mini Square Package), Flip-Chip, Kondensator und Widerstand bestehen.

11. Verfahren zur Diagnose einer Verbindungs-Lebensdauer einer Lötverbindung (3) nach Anspruch 5, bei welchem die Schubbeanspruchung $\tau$ definiert ist als

$$\tau = \frac{\Delta\alpha \cdot \Delta T \cdot d \cdot E}{HJ}$$

wobei $\Delta\alpha$ die Differenz zwischen den Elementen (1, 2, 3) bezüglich ihres thermischen Ausdehnungskoeffizienten ist, $\Delta T$ eine Temperaturänderung ist, d die Größe der elektronischen Vorrichtung ist, E ein Korrekturparameter ist und HJ die Höhe der Verbindungen ist.

12. Verfahren zur Diagnose einer Verbindungs-Lebensdauer einer Lötverbindung (3) nach Anspruch 1, bei welchem das Ergebnis der Verarbeitung an einer Anzeigeeinrichtung dargestellt ist, wobei das Verfahren die Schritte aufweist:

a) Eingeben von Parametern einer Vielzahl unterschiedlicher Lötverbindungen (3) derselben Verbindungsstruktur durch die Eingabeeinrichtung;

b) Berechnen von Schubbeanspruchungen der Vielzahl unterschiedlicher Lötverbindungen (3) durch die Verarbeitungseinrichtung;

c) Berechnen einer äquivalenten Beanspruchungsamplitude entsprechend der Zeit für die thermische Ermüdungs-Lebensdauer für jeden der Werte der Vielzahl der Schubbeanspruchungen durch die Verarbeitungseinrichtung;

d) Definieren einer Beziehung zwischen den Schubbeanspruchungen und den äquivalenten Beanspruchungsamplituden durch die Verarbeitungseinrichtung;

e) Formulieren einer Gleichung für ein Lebensdauer-Bewertungskriterium, welche unter Verwendung der äquivalenten Beanspruchungsamplituden ausgedrückt ist, durch die Verarbeitungseinrichtung;

f) Eingeben einer Gesamtrißlänge und eines speziellen Rißfortschritts durch den allerletzten Zyklus einer Anzahl von auf die Vielzahl unterschiedlicher Lötverbindungen (3) angewendeter Wärmezyklen durch die Eingabeeinrichtung;

g) Bestimmen eines Rißlängen-Rißfortschrittsgeschwindigkeits-Korrelationsmodells durch die Verarbeitungseinrichtung, wodurch ein Lötverbindungs-Lebensdauer-Diagnosemodell mit der äquivalenten Beanspruchungsamplitude erhalten wird;

h) Eingeben eines gewünschten Parameters der zu diagnostizierenden Lötverbindung (3) als dieselbe Verbindungsstruktur;

j) Bestimmen einer entsprechenden äquivalenten Beanspruchungsamplitude entsprechend dem gewünschten Parameter unter Verwendung einer Beziehung zwischen der Schubbeanspruchung und der äquivalenten Beanspruchungsamplituden durch die Verarbeitungseinrichtung;

k) Ersetzen der äquivalenten Beanspruchungsamplituden für die Gleichung für das Lebensdauer-Bewertungskriterium, um die Verbindungs-Lebensdauer des gewünschten Parameters zu gewinnen; und

1) Anzeigen der Lebensdauer der Verbindung durch die Anzeigeeinrichtung;

i) wobei eine Gleichung zur Diagnose des Rißfortschritts unter Verwendung der äquivalenten Beanspruchungsamplituden hergestellt wird und die äquivalente Beanspruchungsamplitude für eine Rißfortschritts-Diagnosegleichung eingesetzt wird, um die Länge des Risses zu berechnen;
ii) wobei der Eingabeschritt die Schritte des Definierens eines Elements einschließt, für welches die Lebensdauer der Lötverbindung (3) diagnostiziert werden soll, um ein Formmodell des Elements auf der Anzeigeeinrichtung anzuzeigen;

m) Eingeben von benötigten Parametern, welche kennzeichnend für die Form der Verbindung (3) entsprechend dem auf der Anzeigeeinrichtung angezeigten Formmodell sind, durch die Eingabeeinrichtung;

n) Eingeben benötigter Materialkonstanten für das zu bewertende Element;

o) Eingeben eines Analysezustandes des zu bewertenden Elementes;

p) Durchführen einer Berechnung entsprechend dem Lötverbindungs-Lebensdauer-Diagnosemodell und der Rißfortschritts-Diagnosegleichung durch die Verarbeitungseinheit; und

q) wobei der Anzeigeschritt den Schritt des Anzeigens des Berechnungsergebnisses als eine Länge des Risses an dem Formmodell auf der Anzeigeeinrichtung beinhaltet sowie ein Darstellen des Diagnoseergebnisses an einem Lötverbindungs-Lebensdauer-Diagnose-diagramm, welches kennzeichnend für die Beziehung zwischen der Anzahl von Temperaturzyklen und der Länge des Risses ist.

13. Verfahren zur Diagnose einer Verbindungs-Lebensdauer einer Lötverbindung (3) nach Anspruch 12, bei welchem das Lötverbindungs-Lebensdauer-Diagnosemodell und die Rißfortschritts-Diagnosegleichung in einem Speicher des Computers als ein Unterprogramm gespeichert sind, nachdem sie einmal erhalten wurden.

14. Verfahren zur Diagnose einer Verbindungs-Lebensdauer einer Lötverbindung (3) nach Anspruch 12, bei welchem der Schritt des Definierens des Elementes (1, 2, 3) durch Auswählen eines Chip-Teiles (1) durchgeführt wird; und wobei das Chip-Teil aus irgendeinem der Gruppe ausgewählt ist, welche besteht aus CCB (Controlled Collapse Bonding), QFP (Quad Flat Package), PLCC (Plastic Leaded Chip Carrier), MSP (Mini Square Package), Flip-Chip, Kondensator und Widerstand.

15. Verfahren zur Diagnose einer Verbindungs-Lebensdauer einer Lötverbindung (3) nach Anspruch 12, bei welchem das Formmodell die Verbindungsbeziehung zwischen den Elementen (1, 2, 3) durch Trigonometrie zeigt.

16. Verfahren zur Diagnose einer Verbindungs-Lebensdauer einer Lötverbindung (3) nach Anspruch 12, bei welchem die Parameter die Größe jedes der Elemente (1, 2, 3) und die Größe eines Spaltes zwischen den Elementen aufweisen.

17. Verfahren zur Diagnose einer Verbindungs-Lebensdauer einer Lötverbindung (3) nach Anspruch 12, bei welchem die Materialkonstanten den thermischen Ausdehnungskoeffizienten jedes der Elemente (1, 2, 3) enthalten.

18. Verfahren zur Diagnose einer Verbindungs-Lebensdauer einer Lötverbindung (3) nach Anspruch 12, bei welchem der Analysezustand eine Temperaturdifferenz und eine Wiederholungsfrequenz umfaßt.

**Revendications**

1. Procédé de diagnostic de la durée de vie d'une connexion soudée (3) entre un substrat (2) et des composants (1) disposés sur celui-ci, le procédé étant mis en oeuvre par un ordinateur, l'ordinateur comprenant des moyens d'entrée pour entrer des informations et des moyens de traitement pour traiter les informations entrées et pour sortir un résultat du traitement, le procédé comprenant les étapes suivantes :

a) on prépare une pluralité de connexions soudées (3) de la même structure de connexion avec différents paramètres de connexion ;

b) on détermine, par le dispositif de traitement, des déformations en cisaillement et des amplitudes des déformations équivalentes de chacune des connections soudées (3) afin de déterminer un modèle approximatif des corrélations des déformations en cisaillement/amplitude des déformations équivalentes pertinentes à une des connexions soudées correspondante ;

c) on applique un certain nombre de cycles de chauffage aux connexions soudées (3) afin de provoquer des fissures dans chacune des connexions soudées ;

d) on mesure une longueur totale de fissure après les cycles de chauffage et un avancement particulier des fissures causées par le tout dernier cycle des cycles de chauffage afin d'obtenir un modèle de corrélation de longueur de fissures/vitesse d'avancement des fissures ;

e) on détermine un modèle de diagnostic de la durée de vie de connexion soudée avec ladite amplitude de déformation équivalente en intégrant le modèle de corrélation de longueur de fissures/vitesse d'avancement des fissures ;

f) on mesure une déformation en cisaillement d'une connexion soudée (3) à diagnostiquer de la même structure de connexion avec un paramètre désiré afin d'obtenir une amplitude de déformation équivalente en utilisant le modèle approximatif de corrélation de déformation en cisaillement/amplitude de déformation équivalente ; et

g) on détermine la durée de vie de connexion de la connexion soudée (3) avec le paramètre désiré en appliquant l'amplitude de déformation équivalente de la connexion soudée avec le paramètre désiré dans ledit modèle de diagnostic de la durée de vie de connexion.

2. Procédé de diagnostic de la durée de vie de connexion d'une connexion soudée (3) selon la revendication 1 caractérisé en ce que la relation entre les valeurs des dites amplitudes de déformation équivalente est représentée par

$$\Delta\varepsilon_{eqmax} = A\tau^2 + B'\tau, \tau = \frac{\Delta\alpha \cdot \Delta T \cdot d \cdot E}{HJ}$$

$\Delta\varepsilon_{eqmax}$ étant la déformation équivalente maximale de la connexion, $\tau$ étant une déformation en cisaillement pure, A,B étant des constantes, d étant la distance du centre d'une puce de semiconducteur et le boîtier, $\Delta\alpha$ étant la différence du coefficient thermique, E étant une constante, HJ étant la hauteur de la connexion soudée et $\Delta$T étant la variation de température.

3. Procédé de diagnostic de la durée de vie de connexion d'une connexion soudée (3) selon la revendication 1, caractérisé en ce que le modèle de diagnostic de la durée de vie de connexion est représenté par l'équation :

$$N_f = \frac{1}{C} \log \left| \frac{A_{af} + B}{A_{ao} + B} \right| (\Delta\varepsilon_{eqmax})^{-n}$$

$N_f$ étant le nombre de vie des cycles de température causant une fracture ; A, B et C étant des constantes ; af étant la longueur de vie d'une fissure ; ao étant la longueur initiale d'une fissure ; et $\Delta\varepsilon_{eqmax}$ étant la déformation maximale équivalente de la connexion (3).

4. Procédé de diagnostic de la durée de vie de connexion d'une connexion soudée (3) selon la revendication 1, caractérisé en ce qu'on établit un modèle de diagnostic de l'avancement d'une fissure en utilisant les amplitudes des déformations équivalentes, et on substitue ladite amplitude de déformation équivalente dans ledit modèle de diagnostic de l'avancement de fissure afin de diagnostiquer la longueur de la fissure.

5. Procédé de diagnostic de la durée de vie de connexion d'une connexion soudée selon la revendication 4, caractérisé en ce que le modèle de diagnostic de l'avancement des fissures est représenté par

$$a = \frac{1}{A} \{(A_{ao} + B) \exp\{C \cdot N(\Delta\varepsilon_{eqmax})^{-n}\} - B\}$$

$\Delta\varepsilon_{eqmax}$ étant la déformation maximale équivalente de la connexion ; a étant la longueur de la fissure ; N étant le nombre de cycles ; A, B, C étant des constantes ; et ao étant la longueur initiale de la fissure.

6. Procédé de diagnostic de la durée de vie de connexion d'une connexion soudée selon la revendication 1, caractérisé en ce que la durée de vie de la connexion est définie par le nombre de cycles de chauffage après lesquels la connexion est interrompue.

7. Procédé de diagnostic de la durée de vie de connexion d'une connexion soudée selon la revendication 1, caractérisé en ce qu'on acquiert lesdites valeurs des amplitudes de déformation équivalente par la relation entre lesdites valeurs des amplitudes de déformation équivalente préparées à l'aide d'une analyse thermique élastique/plastique en trois dimensions par une méthode d'éléments finis et lesdites valeurs des déformations en cisaillement.

8. Procédé de diagnostic de la durée de vie de connexion d'une connexion soudée (3) selon la revendication 1, caractérisé en ce que les pièces chargées sur le substrat (2) comprennent un dispositif électronique et en ce que lesdites déformations en cisaillement se produisent dans la connexion soudée (3).

9. Procédé de diagnostic de la durée de vie de connexion d'une connexion soudée (3) selon la revendication 5, caractérisé en ce que lesdites pièces chargées sur le substrat (2) comprennent des éléments de puce (1) connectés avec le substrat au travers de la connexion soudée (3).

10. Procédé de diagnostic de la durée de vie de connexion d'une connexion soudée (3) selon la revendication 9, caractérisé en ce que les éléments de puce (1) sont choisis dans le groupe formé par CCB ("Controlled Collapse Bonding"), QFP ("Quad Flat Package"), PLCC ("Plastic Leaded Chip Carrier"), MSP ("Mini Square Package"), flip chip, condensateur et résistance.

11. Procédé de diagnostic de la durée de vie de connexion d'une connexion soudée (3) selon la revendication 5, caractérisé en ce que la déformation en cisaillement τ est définie en tant que

$$\tau = \frac{\Delta\alpha \cdot \Delta T \cdot d \cdot E}{HJ}$$

$\Delta\alpha$ étant la différence entre les éléments (1, 2, 3) concernant leur coefficient de dilatation thermique, $\Delta T$ étant la variation de température, d étant la dimension du dispositif électronique, E étant un paramètre de correction, et HJ étant la hauteur de la connexion.

12. Procédé de diagnostic de la durée de vie de connexion d'une connexion soudée (3) selon la revendication 1, caractérisé en ce que le résultat du traitement est affiché sur un moyen d'affichage, le procédé comprenant les étapes suivantes :

a) on entre, par les moyens d'entrée, des paramètres d'une pluralité de connexions soudées (3) différentes de la même structure de connexion ;

b) on calcule, à l'aide des moyens de traitement, des déformations en cisaillement de la pluralité de connexions soudées (3) différentes ;

c) on calcule, par les moyens de traitement, l'amplitude de déformation équivalente correspondant à la durée de vie de fatigue thermique pour chacune des valeurs de la pluralité des déformations en cisaillement ;

d) on définit à l'aide du moyen de traitement une relation entre les déformations en cisaillement et les amplitudes de déformation équivalente ;

e) on formule à l'aide des moyens de traitement une équation de critère d'évaluation de durée de vie exprimée en utilisant les amplitudes de déformation équivalente ;

f) on entre à l'aide des moyens d'entrée une longueur totale de fissure et un avancement de fissure particulier par le tout dernier cycle d'un nombre de cycles de chauffage appliqué à la pluralité des différentes connexions soudées (3) ;

g) on détermine à l'aide des moyens de traitement un modèle de corrélation de longueur des fissures/vitesse d'avancement de fissure obtenant par cela un modèle de diagnostic de la durée de vie de la connexion soudée avec ladite amplitude de déformation équivalente ;

h) on entre un paramètre désiré de la connexion soudée (3) à diagnostiquer de la même structure de connexion ;

j) on détermine à l'aide des moyens de traitement une amplitude correspondante de la déformation équivalente correspondant aux paramètres désirés en utilisant une relation entre la déformation en cisaillement et les amplitudes de déformation équivalente ;

k) on substitue les amplitudes de déformation équivalente à l'équation du critère d'évaluation de la durée de vie afin d'acquérir la durée de vie de connexion du paramètre désiré ; et

l) on affiche à l'aide des moyens d'affichage la durée de vie de ladite connexion ;

    i) une équation pour diagnostiquer l'avancement d'une fissure étant faite en utilisant les amplitudes de déformation équivalente et ladite amplitude de déformation équivalente étant substituée à une équation de diagnostic de l'avancement de fissure afin de calculer la longueur de fissure ;

    ii) l'étape d'entrée incluant les étapes de définition d'un élément pour lequel la durée de vie de la connexion soudée (3) est à diagnostiquer afin d'afficher un modèle de la forme de l'élément sur les moyens d'affichage,

m) on entre à l'aide des moyens d'entrée des paramètres requis représentatifs de la forme de la connexion (3) en accord avec le modèle de forme affiché sur les moyens d'affichage ;

n) on entre des constantes de matériau requises pour l'élément à évaluer ;

o) on entre une condition d'analyse de l'élément à évaluer ;

p) on exécute à l'aide des moyens de traitement un calcul en accord avec le modèle de diagnostic de la durée de vie d'une connexion soudée et l'équation de diagnostic de l'avancement de fissure; et

q) l'étape d'affichage inclut l'étape d'affichage sur les moyens d'affichage du résultat des calculs comme une longueur de fissure sur le modèle de forme, et d'illustration du résultat de diagnostic sur une courbe de diagnostic de la durée de vie de la connexion soudée représentative de la relation entre le nombre de cycles de température et la longueur de la fissure.

13. Procédé de diagnostic de la durée de vie de connexion d'une connexion soudée (3) selon la revendication 12, caractérisé en ce que, une fois obtenus, le modèle de diagnostic de la durée de vie de la connexion soudée et l'équation de diagnostic de l'avancement de fissure sont stockés dans la mémoire de l'ordinateur sous forme de sous-programme.

14. Procédé de diagnostic de la durée de vie de connexion d'une connexion soudée (3) selon la revendication 12, caractérisé en ce qu'on exécute l'étape de définition de l'élément (1, 2, 3) en sélectionnant un élément de puce (1) ; et en ce qu'on sélectionne l'élément de puce dans un groupe formé par CCB ("Controlled Collapse Bonding"), QFP ("Quad Flat Package"), PLCC ("Plastic Leaded Chip Carrier"), MSP ("Mini Square Package"), flip chip, condensateur et résistance.

15. Procédé de diagnostic de la durée de vie de connexion d'une connexion soudée (3) selon la revendication 12, caractérisé en ce que le modèle de forme montre la relation de connexion entre les éléments (1, 2, 3) par trigonométrie.

16. Procédé de diagnostic de la durée de vie de connexion d'une connexion soudée (3) selon la revendication 12, caractérisé en ce que lesdits paramètres comprennent la taille de chacun des éléments (1, 2, 3) et la longueur de la distance entre les éléments.

17. Procédé de diagnostic de la durée de vie de connexion d'une connexion soudée (3) selon la revendication 12, caractérisé en ce que les constantes de matériau comprennent le coefficient de dilatation thermique de chacun desdits éléments (1, 2, 3).

18. Procédé de diagnostic de la durée de vie de connexion d'une connexion soudée (3) selon la revendication 12, caractérisé en ce que ladite condition d'analyse comprend une différence de température et une fréquence de répétition.

# FIG. 1

$\Delta\epsilon$ ... ENTIRE STRAIN AMPLITUDE

$\Delta\epsilon e$ ... ELASTIC STRAIN AMPLITUDE

$\Delta\epsilon_P$ ... PLASTIC STRAIN AMPLITUDE

$\Delta\sigma$ ... STRESS AMPLITUDE

# FIG. 2

PEAL STRAIN OR EQUIVALENT STRAIN

## F I G . 3

CYCLE

## F I G . 4A

DB...DIAMETER OF CONNECTION,
a... LENGTH OF CRACK,
da/dN...SPEED OF CRACK
ADVANCEMENT,

## F I G . 4B

$$N = \frac{1}{A} log \left| \frac{Aa + B}{Aa_0 + B} \right|$$

N...NUMBER OF CYCLES,
a₀... LIFE LENGTH OF CRACK,
af... LIFE NUMBER OF CYCLES,
Nf...LIFE NUMBER OF CYCLE,
A,B... CONSTANT,

18

FIG. 5

FIG. 6A

SPEED OF CRACK ADVANCEMENT

$\dot{a}_2$

$\dot{a}_1$

$da/dN = Aa + B$

$a_1$

$a_2$

LENGTH OF CRACK $a \ (\mu m)$

FIG. 6D

$a_1$

$a_2$

# FIG . 6B

# FIG . 6C

SEM IMAGE AT $\dot{a}_1$

SEM IMAGE AT $\dot{a}_2$

0.1 $\mu$m

# FIG. 7

EQUIVALENT STRESS σeq (Kg/mm²)

$\Delta\epsilon$eqmax

EQUIVALENT STRAIN $\epsilon$eq

# FIG. 8

LENGTH OF CRACK a(μm)

$a_0$

$$N = \int_{a_0}^{af} \frac{da}{f(a) \cdot g(\Delta\epsilon eqmax)}$$

NUMBER OF CYCLES

21

# FIG. 9

# FIG. 10

d...DISTANCE FROM THE CENTER,
$\gamma$...PURE SHEARING STRAIN,
HJ...HEIGHT OF CONNECTION,
$\Delta a$...DIFFERENCE IN THERMAL
   EXPANSION COEFFICIENT,
$\Delta T$...TEMPERATURE
   CHANGE,
A,B,E...CONSTANT

$$\Delta \epsilon eqmax = A\gamma^2 + B\gamma$$

$$\gamma = \frac{\Delta a \cdot \Delta T \cdot d \cdot E}{HJ}$$

PURE SHEARING STRAIN $\gamma$ (%)

# FIG. II

▽ START

STEP0

SELECT CONTROL MODE

=1 STEP1: SELECT ELECTRON DEVICE TO BE EVALUATED

=2 STEP2: INPUT SHAPE OF COM-PONENTS AND CONNECTION

=3 STEP3: INPUT SEVERAL MATERIAL CONSTANT

=4 STEP4: REGISTER EVALUATION EQUATIONS (LIFE EQUATION, CRACK ADVANCEMENT)

=5 STEP5: INPUT ANALYSIS CONDITION

=6 STEP6: CALCULATE LIFE AND DISPLAY RESULT

=7 STEP7: DISPLAY CRACK ADVANCE-MENT AND EVALUATE LIFE

EVALUATION

IS NEXT MODE SELECTED ? STEP0

END

# F I G . 12A

✳✳✳SHAPE INPUT✳✳✳

PACKAGE CENTER

LIST OF CCB STRUCTURE PARAMETERS

(UNIT:mm deg)

| VARIABLE | SIZE | VARIABLE | SIZE | VARIABLE | SIZE | VARIABLE | SIZE |
|----------|------|----------|------|----------|------|----------|------|
| L I |  |  |  | DB |  | D |  |
|  |  |  |  | DP |  |  |  |
|  |  | HJ |  |  |  |  |  |

DISTANCE FROM CENTER $d = \sqrt{L1 \times L1 + D \times D}$ =

SOLDER VOLUME $V = mm^3$

PACKAGE CENTER

FIG. 12B

***CRACK ADVANCEMENT DISPLAY***  (INPUT ENVIROMENTAL CONDITION AND NUMBER OF TEMPERATURE CYCLES OR CRACK LENGTH)

d =        CENTER

DB

~1

4

CRACK ADVANCEMENT IN SECTION

HJ =

DP

~2

CRACK ADVANCEMENT IN PAD FACE

$l$

$l = MIN (DB \cdot DP)$

$=$

| SELECT ENVIROMENTAL CONDITION : I | 1. ACCELERATING TEST 2. ACTUAL USE | |
|---|---|---|
| Tmax | Δt | f |
| °C | °C | C./H |
| NUMBER OF TEMPERATURE CYCLES N = C | | |
| LENGTH OF CRACK ADVANCEMENT   a = mm | | |

DEGREE OF CRACK ADVANCEMENT $2a/l$ (%)

100

50

$N = \dfrac{1}{A} log \dfrac{(A\frac{2a}{l} + B)}{B}$

O        Nf/2        Nf (BREAKDOWN CYCLE)

NUMBER OF TEMPERATURE CYCLE

EP 0 392 471 B1